# FASCICULE DE BREVET EUROPEEN

(11) **EP 1 401 156 B1**
(45) Date de publication et mention de la délivrance du brevet: **28.02.2007**
(21) Numéro de dépôt: 03292307.0
(22) Date de dépôt: 19.09.2003
(51) Int. Cl.: H04L 12/433, H04L 12/56, H04L 12/28

(54) **Procédé de contrôle d'accès dans un réseau à ressources partagées, noeud et réseau correspondants**
Verfahren zur Zugriffskontrolle auf ein gemeinsam genutztes Netzwerk, zugehöriges Netzwerkelement und Netzwerk
Method for access control in a shared medium network, corresponding node and network

(30) Priorité: 19.09.2002 FR 0211599
(43) Date de publication de la demande: 24.03.2004
(73) Titulaire: ALCATEL, 75008 Paris (FR)
(72) Inventeur: Dotaro, Emmanuel, 91370 Verrières le Buisson (FR)
(74) Mandataire: Sciaux, Edmond

(56) Documents cités:
- HWHANG, CHII-CHAU; CHOU, ARR-MIEN: "Controlled Bandwidth DQDB; Achieving fairness and maximum throughput in the DQDB network" IEEE CONFERENCE PROCEEDING, no. 2, - 11 septembre 1993 (1993-09-11) pages 538-542, XP002266073 Singapure
- SHIH-FU CHANG ET AL: "ADAPTIVE BANDWIDTH BALANCING ON DQDB NETWORKS" DISCOVERING A NEW WORLD OF COMMUNICATIONS. CHICAGO, JUNE 14 - 18, 1992, PROCEEDINGS OF THE INTERNATIONAL CONFERENCE ON COMMUNICATIONS, NEW YORK, IEEE, US, vol. 2, 14 juin 1992 (1992-06-14), pages 1092-1096, XP000326835 ISBN: 0-7803-0599-X
- HAHNE E L ET AL: "DQDB NETWORKS WITH AND WITHOUT BANDWIDTH BALANCING" IEEE TRANSACTIONS ON COMMUNICATIONS, IEEE INC. NEW YORK, US, vol. 40, no. 7, 1 juillet 1992 (1992-07-01), pages 1192-1204, XP000281071 ISSN: 0090-6778
- SHEU P-R ET AL: "An optimal time slot assignment algorithm for CRMA high-speed networks" COMPUTER COMMUNICATIONS, ELSEVIER SCIENCE PUBLISHERS BV, AMSTERDAM, NL, vol. 21, no. 7, 15 juin 1998 (1998-06-15), pages 675-685, XP004132236 ISSN: 0140-3664
- ANDREW TANENBAUM: "Computer Networks" 1996 , PRENTICE HALL , UPPER SADDLE RIVER XP002243185 * alinéa [4.3.5]; figures 4-32 *
- FRED HALSALL: "Data Communications, Computer Networks and Open Systems" 1996 , ADDISON WESLEY , HARLOW XP002243186 * alinéas [10.7]-[10.7.2] *

## Description

La présente invention concerne un procédé de contrôle de trafic dans un réseau où des noeuds accèdent à une même ressource, à structure linéaire, pour émettre des données à destination d'autres noeuds.

Un tel réseau est par exemple un réseau en anneau transportant des paquets optiques, du type DBORN (Dual Bus Optical Ring Network). L'architecture de ce réseau comprend deux anneaux reliés à un concentrateur, et comporte une pluralité de noeuds tels que des multiplexeurs d'insertion/extraction de paquets optiques, chaque noeud étant en communication avec le concentrateur, par les deux anneaux, chaque anneau étant mono directionnel. Une pluralité de noeuds partage une même ressource, telle qu'une longueur d'onde, pour émettre des paquets de données en direction du concentrateur. Chacun des noeuds partageant la même ressource doit utiliser un mécanisme dit de « détection de trous », détectant une absence de transmission de données pendant une durée au moins égale à une durée fixée. Quand un noeud a détecté un trou, il peut émettre sur la ressource un paquet de données ayant une durée inférieure ou égale à cette durée fixée, sans aucun risque de collision avec l'émission d'un noeud qui le précède sur le bus considéré, appelé noeud en amont. Si la ressource est une longueur d'onde, la détection d'un trou est faite à l'aide d'une photodiode recevant exclusivement cette longueur d'onde. Une ligne à retard optique est insérée en aval, entre cette photodiode et le point où a lieu l'émission de données. Elle détermine la durée maximale qui peut être exploitée par le noeud considéré, dans chacun des trous, pour émettre des données. Chaque paquet que doit émettre un noeud est stocké dans une mémoire tampon située dans ce noeud, et ce paquet n'est émis sur la ressource que dans la mesure où un trou de durée suffisante est détecté par la photodiode.

Toutefois, un tel réseau basé sur le partage des ressources entraîne des problèmes d'équité entre les noeuds ; en effet, les noeuds les plus en amont sont plus favorisés pour l'accès et l'utilisation de la bande passante que les noeuds les plus en aval, puisqu'ils détectent et peuvent utiliser les trous avec de l'avance par rapport aux noeuds situés en aval.

Un procédé connu de contrôle de trafic, appelé anneau à jeton, consiste à faire circuler dans un anneau un jeton qui est un droit exclusif d'émettre de données : A chaque instant il n'y a qu'un seul jeton dans le réseau. Un noeud qui capture le jeton devient le seul noeud pouvant émettre des données sur la ressource. Le jeton est réinitialisé par un noeud directeur lorsque le noeud qui l'a capturé l'a relâché. Ce procédé permet d'éviter les collisions, mais ne permet pas de traiter équitablement un noeud en aval par rapport à un noeud en amont. En outre, il n'est pas compatible avec les hauts débits. En effet, l'envoi d'un jeton et son retour entraînent un délai de transmission important.

D'autres procédés connus dits déterministes, consistent à décomposer le temps d'émission en tranches de temps. Chacun des noeuds a un droit d'émettre dans une tranche de temps déterminée. Ce découpage déterministe permet d'assurer un minimum de bande passante à chacun des noeuds.

Un exemple de procédé déterministe est décrit dans le document de **SHEU P-R ET AL : « An optimal time slot assignment algorithm for CRMA high speed networks »** COMPUTER COMMUNICATIONS, ELSEVIER SCIENCE PUBLISHERS BV, AMSTERDAM, NL, vol 21, n° 7, 15 juin 1998, (1998-06-15), pages 675-685, XP004132236, ISSN : 0140-3664. Un réseau CRMA (Cyclic Reservation Multiple Access) comporte une double liaison, dans laquelle une liaison est utilisée dans une direction donnée, et l'autre liaison est utilisée dans la direction opposée. Un noeud de tête émet des trames correspondant à des tranches de temps de durée fixe. Ces trames sont utilisées essentiellement pour transporter des données d'un noeud à un autre, chaque trame étant attribuée à un seul noeud. Périodiquement, le noeud de tête émet une trame spéciale dite de collecte de demandes de réservation. Cette trame traverse successivement tous les noeuds jusqu'à un noeud de fin puis elle retraverse tous le noeuds jusqu'au noeud de tête. Pendant son retour, elle enregistre, en nombre de trames, les besoins de l'ensemble des noeuds. Chaque noeud réserve ainsi un certain nombre de trames vides pour les données qu'il doit émettre. Le noeud de tête émet alors une supertrame comportant des trames vides attribuées respectivement aux noeuds demandeurs. Si les réservations ne sont pas trop nombreuse, la supertrame comporte un nombre de trames correspondant à la somme des nombres de trames réservées par l'ensemble des noeuds. Si les réservations sont trop nombreuses, le noeud de tête attribue les trames selon un algorithme permettant de maintenir l'équité entre les noeuds.

Un autre exemple de procédé déterministe est décrit dans le livre de **ANDREW TANENBAUM: « Computer networks »** 1996, PRENTICE HALL, UPPER SADDLE RIVER, XP 002243185, qui décrit un réseau appelé DQDB (Distributed Queue Dual Bus). Ce réseau comporte une double liaison, dans laquelle une liaison est utilisée dans une direction donnée, et l'autre liaison est utilisée dans la direction opposée. Un noeud de tête émet des trames correspondant à des tranches de temps de durée fixe. Ces trames sont utilisées essentiellement pour transporter des données d'un noeud à un autre, chaque trame étant attribuée à un seul noeud. Les noeuds émettent leurs données respectives dans ces trames, selon une discipline du type premier-demandeur-premier-servi, sans qu'il y ait une file d'attente centralisée. Pour éviter de favoriser les stations les plus en amont, pour une direction donnée, chaque noeud qui veut émettre des données dans cette direction donnée fait d'abord une réservation en mettant à 1 un bit, dit de requête, dans une trame passant sur le bus dédié à la direction opposée. Chaque noeud comporte un compteur de requêtes et un décompteur. Le compteur de requêtes compte le nombre de stations situées en aval (pour la direction donnée) qui ont fait une réservation, en comptant les trames remontant vers l'amont et ayant un bit de requête égal à 1, jusqu'à ce que ce noeud ait lui-même un paquet de données à émettre. Lorsqu'il a un paquet de données à émettre, ce noeud transfère le contenu de son compteur de requêtes dans son décompteur, et remet à zéro son compteur de requêtes. Puis le compteur de requêtes compte de nouveau les trames remontant en amont et ayant un bit de requête égal à 1. Le décompteur indique le nombre de trames vides que le noeud considéré doit laisser à la disposition des noeuds situés en aval. Son contenu est décrémenté chaque fois que ce noeud voit passer une trame libre. Quand ce contenu est redevenu nul, cela signifie que toutes les requêtes des noeuds en aval ont été satisfaites. Le noeud considéré peut alors utiliser la prochaine trame vide pour émettre des données.

Un procédé est décrit dans le document « Adoptive Bandwidth Balancing on DQDB Newtorks », Chang, Messerschmidtt, Albanese; IEEE 1992 XP326835. Ce document proprose de fournir un procédure adaptatif de répartition de largeur de bande, ou BWB (Bandwidth Balancing) basé sur l'intensité du trafic local dans chaque station. Le statut local de la file d'attente est employé pour commander l'arrangement. Dans chaque station, le nombre de demandes reçues d'autres stations est obtenu et la station est requise du laisser passer la prochaine intervalle vide utilisable à la station en aval. De cette manière une certaine largeur de bande est réservée pour les stations en aval.

Ces procédés déterministes soulèvent certaines difficultés. En effet, l'utilisation de tranches de temps bien définies impose la présence d'une horloge de synchronisation dans chacun des noeuds afin de synchroniser l'émission des données dans ces tranches de temps.

La présente invention vise à fournir un procédé de contrôle de trafic permettant la gestion de l'accès à une ressource partagée en assurant l'équité entre les noeuds mais sans utiliser de messages transitant par un noeud directeur, et en s'affranchissant des problèmes de synchronisation et de mauvaise utilisation de la bande passante.

L'objet de l'invention est défini par les revendications indépendantes.

Le procédé ainsi caractérisé assure une équité d'accès parce que, en l'appliquant dans chaque noeud, il préserve une partie de la ressource pour tous les noeuds en aval du noeud considéré. Par récurrence, la partie préservée est croissante en fonction de la position du noeud vers l'amont ; autrement dit, la partie préservée est d'autant plus grande que le noeud considéré est plus en amont. Cette croissance de la partie préservée favorise tous les noeuds situés en aval pour compenser le handicap découlant de leur position en aval. Ainsi, elle permet de rétablir l'équité. Cette partie de la ressource étant déterminée de manière statistique, il n'y a pas préservation et attribution d'un partie déterminée de la ressource à un noeud déterminé, mais il y a une préservation statistique. Il n'est donc pas nécessaire que la ressource soit découpée en tranches temporelles allouées de manière fixe. Par conséquent, il est pas nécessaire de synchroniser le fonctionnement des noeuds. Cependant ce procédé est compatible aussi avec un éventuel fonctionnement synchrone des noeuds.

Il est à noter en outre que la préservation d'une partie de la ressource est toujours réalisable dans tous les noeuds, quelle que soit la position du noeud. En effet, la partie de ressource qui est à préserver étant déterminée en fonction de la somme des besoins des noeuds en aval du noeud considéré, cette partie est d'autant plus petite que le noeud est le plus en aval, et elle est un sous-ensemble de la partie déjà préservée par le noeud immédiatement en amont.

Selon un mode de mise en oeuvre particulier, pour déterminer statistiquement une partie de ladite ressource à préserver, en fonction des besoins d'utilisation de cette ressource pour l'ensemble des noeuds situés en aval du noeud considéré, il consiste à fournir à chacun desdits noeuds des informations définissant statistiquement les besoins en ressource pour l'ensemble des noeuds situés en aval.

Les informations définissant statistiquement les besoins en ressource pour l'ensemble des noeuds situés en aval, la préservation d'une partie de la ressource pour ces noeuds est faite de manière statistique. La partie préservée n'est pas attribuée et répartie de manière déterministe à chaque noeud, par conséquent il n'est pas nécessaire de synchroniser le fonctionnement des noeuds. La présente invention a également pour objet un noeud de réseau pour la mise en oeuvre du procédé selon l'invention.

D'autres caractéristiques et avantages de la présente invention apparaîtront dans la description suivante d'un mode de réalisation de l'invention donné à titre illustratif et nullement limitatif.
- La figure 1 représente un exemple de réseau mettant en oeuvre le procédé selon l'invention.
- La figure 2 représente schématiquement la partie, de ressource, préservée par chacun des noeuds représentés sur la figure 1, pour illustrer la mise en oeuvre du procédé selon l'invention, dans cet exemple de réseau.

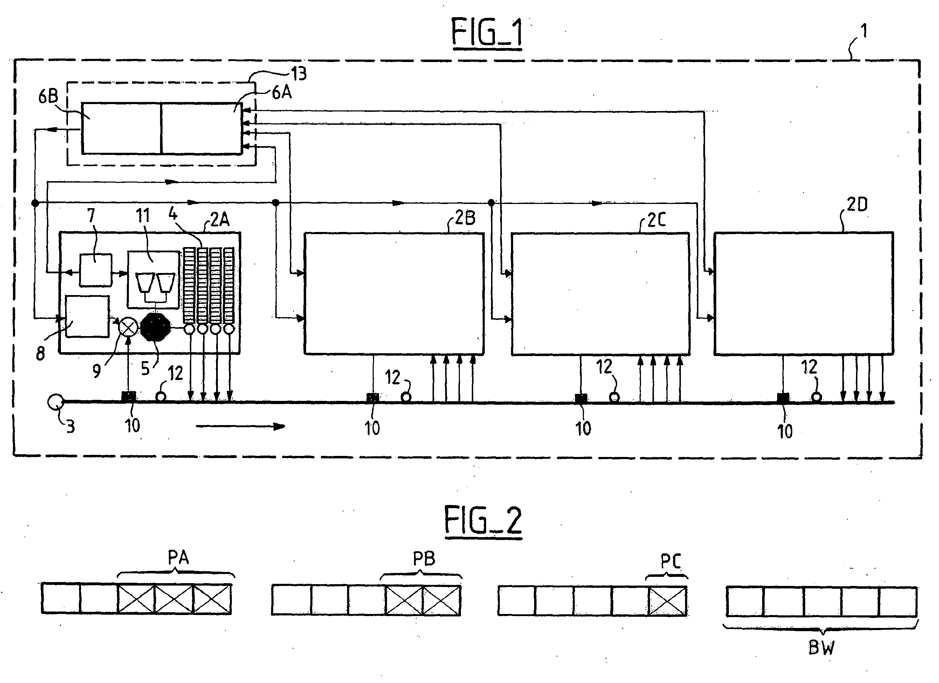

L' exemple de réseau 1 représenté sur la **figure 1** comporte :
- des noeuds 2A, 2B, 2C, 2D, ayant des structures analogues ;
- une ressource 3, qui est une longueur d'onde d'une liaison optique DWDM (Dense Wavelength Division Multiplex), sur laquelle tous les noeuds 2A, ..., 2D peuvent émettre par un multiplexage temporel ;
- un gestionnaire de bande passante, 13, comportant des moyens de réception 6A pour recevoir et centraliser des informations statistiques sur les besoins des noeuds 2A,...,2D ; et des moyens d'émission 6B pour fournir, à chacun des noeuds 2A,...,2D, des informations statistiques sur les besoins des noeuds situés en aval du noeud considéré, en ce qui concerne l'utilisation de la ressource 3.

Dans cet exemple de réalisation, le gestionnaire de bande passante est situé dans une entité centrale, qui peut être l'un quelconque des noeuds du réseau ; et Il est relié à tous les noeuds du réseau 1 en utilisant la ressource 3. Ceci occupe très peu la ressource 3, puisqu'il ne faut transmettre que quelques paquets de données de signalisation chaque fois que les besoins statistiques d'au moins un noeud sont modifiés. Cette modification ne se produit que lors d'un changement de contrat de service.

Dans d'autres modes de réalisation, ces informations peuvent être transmises par une liaison quelconque, indépendante de la ressource 3.

La direction de propagation sur la ressource 3 correspond à l'ordre 2A, 2B, 2C, 2D.

Tous les noeuds du réseau 1 sont constitués de manière analogue, et sont associés chacun à une photodiode 10 et une ligne à retard optique 12, placée en aval de la photodiode 10, sur la ressource 3. Chaque noeud émet sur la ressource 3 en aval de la ligne à retard 12 qui lui est associée. Ainsi chaque noeud peut détecter et exploiter un trou ayant une durée correspondant au retard procuré par cette ligne à retard. Ce retard est choisi au moins égal à la durée maximale des paquets à émettre. Un noeud commence à émettre un paquet, au début du trou, seulement si la taille du paquet est inférieure à la taille du trou détecté. Dans le cas contraire, le paquet reste dans la mémoire tampon du noeud jusqu'à ce qu'un trou suffisamment grand soit détecté.

Considérons, à titre d'exemple, le noeud 2A. Il comporte :
- des mémoires tampons 4, pour mémoriser les paquets de données à émettre, ces mémoires tampons étant couplées à la ressource 3, en aval de la ligne à retard 12, par des émetteurs optiques et des coupleurs classiques ;
- une mémoire 7 pour mémoriser les besoins d'utilisation de la ressource 3 par le noeud considéré, 2A, cette mémoire 8 ayant une sortie couplée aux moyens de réception 6A du gestionnaire de bande passante 13 ;
- un contrôleur d'admission de trafic 11, de type seau percé (Token bucket en Anglais) ayant une entrée reliée à une sortie de la mémoire 7, et une sortie fournissant une suite d'autorisations d'émission, concernant chaque fois un paquet de données ;
- une mémoire 8 pour mémoriser les besoins d'utilisation de la ressource 3 par l'ensemble des noeuds situés en aval du noeud considéré, 2A, cette mémoire 8 ayant une entrée de données couplée aux moyens d'émission 6B du gestionnaire de bande passante 13 ;
- un circuit logique 9, ayant une première entrée reliée à une sortie de la mémoire 8, une seconde entrée reliée à la photodiode 10, et une sortie ;
- et un circuit logique 5 ayant une première entrée reliée à la sortie du contrôleur 11, une seconde entrée reliée à la sortie du circuit 9, et une sortie reliée à une entrée de commande de lecture des mémoires tampons 4.

La **figure 2** représente schématiquement la partie de ressource, préservée par chacun des noeuds représentés sur la figure 1, pour illustrer la mise en oeuvre du procédé selon l'invention, dans cet exemple de réseau. Elle représente la part de ressource préservée respectivement par chacun des noeuds 2A, ..., 2D, en s'interdisant d'émettre des données. Dans cet exemple très simple, chacun des noeuds a besoin statistiquement d'un cinquième de la bande passante totale BW de la ressource 3. Le noeud le plus en aval, 2D, ne s'interdit jamais d'émettre (quand il a détecté un trou de longueur suffisante) car aucun noeud n'est situé en aval. Le noeud le précédant en amont, 2C, s'interdit d'émettre dans une partie PC égale à un cinquième de la bande passante. Le noeud le précédant en amont, 2B, s'interdit d'émettre dans une partie PB égale à deux cinquièmes de la bande passante. Le noeud le précédant en amont, 2A, s'interdit d'émettre dans une partie PA égale à trois cinquièmes de la bande passante.

Dans cet exemple, la préservation d'une partie de la bande passante est réalisée en interdisant au noeud considéré d'émettre un ou plusieurs paquets de données alors qu'il a détecté un trou ayant une durée suffisante pour au moins un paquet de données.

Il faut noter ici que la partie de ressource 3 où l'émission est interdite, va décroître au fur et à mesure que l'on se rapproche du noeud le plus en aval. Cette dernière remarque implique que chaque noeud peut, de façon certaine, préserver la partie de ressource nécessaire parce qu'il pourra préserver un sous-ensemble de la partie déjà préservée par un noeud plus en amont. Préserver des trous déjà préservés par un noeud en amont a pour avantage d'éviter de préserver inutilement des trous supplémentaires.

Un contrat de niveau de service (Service Level Agreement) est associé à chaque client, et donc à chaque noeud. Il est stocké dans la mémoire 7 de ce noeud. Cette mémoire 7 contient par exemple des informations définissant de manière statistique le débit garanti CIR (Committed Information Rate) et le pic de débit garanti PIR (Peak Information Rate). Elle fournit ces information au contrôleur 11. D'autre part, ces informations sont envoyées par chacun des noeuds 2A, ..., 2D, aux moyens de réception 6A du gestionnaire de bande passante 13 pour centraliser les informations statistiques définissant les besoins des noeuds 2A,...,2D, en ce qui concerne l'utilisation de la ressource 3.

Nous avons considéré ici une mise à jour quasi-statique des informations reçues par les moyens de réception 6A mais que l'on peut également envisager une mise à jour dynamique de ces informations, en fonction de besoins variables, et non en fonction d'un contrat fixé.

Chaque noeud 2A,..., 2D reçoit et mémorise dans sa mémoire 8, les informations concernant les besoins d'utilisation de la ressource 3 par tous les noeuds situés en aval du noeud considéré. Par exemple, le noeud 2B a connaissance des besoins d'utilisation de la ressource 3 par les noeud 2C et 2D. Les informations contenues dans la mémoire 8 du noeud 2B sont converties dans le circuit logique 9 en un signal représentant une partie de la ressource, cette partie étant à préserver. Dans cet exemple, ce signal représente un pourcentage de la bande passante totale de la ressource 3, ce pourcentage étant la somme des pourcentages correspondant respectivement aux besoins de tous les noeuds situés en aval. Dans cet exemple, la préservation de bande passante consiste en une préservation de certains trous, pour permettre à tous les noeuds en aval du noeud considéré d'émettre des paquets de données dans les trous préservés.

Le circuit 9 reçoit de la photodiode 10 un signal indiquant que la ressource est libre ou non. Si la ressource est libre, le circuit 9 mesure la durée du trou. Le circuit 9 détermine si le trou a une durée au moins égale au retard procuré par la ligne à retard 12. Si c'est le cas, à partir de la connaissance du pourcentage de bande passante à préserver, le circuit 9 détermine la durée d'un signal d'interdiction d'émettre qu'il applique au circuit 5.

D'autre part, le circuit 5 reçoit du contrôleur d'admission de trafic 11 un signal de demande d'émission de paquet de données quand ce circuit 11 décide l'émission d'un paquet. Le circuit 5 transmet, à la mémoire tampon 4, ce signal de demande d'émission d'un paquet de données à condition que le circuit 9 lui autorise l'émission. Si ce n'est pas le cas, le circuit 5 attend que le circuit 9 lui signale un trou non préservé et de durée suffisante pour la longueur du paquet de données à émettre.

La taille de chaque paquet ayant une charge utile peut être de 500 octets ou 1500 octets dans cet exemple. La taille d'un trou préservé par l'interdiction d'émettre que s'impose un noeud doit être au moins égale à la taille maximale d'un paquet de données, pour permettre l'émission des paquets de taille maximale, soit ici 1500 octets. Dans cet exemple, chaque interdiction d'émettre décidée par le circuit 9 a une durée correspondant à une taille de 1500 octets, ou un multiple de cette taille que nous appellerons durée élémentaire d'interdiction. L'interdiction dure tant que sa durée n'a pas atteint un nombre total de durées élémentaires d'interdiction correspondant au pourcentage de bande passante à préserver, l'interdiction étant prédominante sur l'émission de paquets. Pour préserver une partie de ressource correspondant à P paquets de données ayant la taille maximale, le circuit 9 fournit au circuit 5 un signal d'interdiction ayant une durée égale à P durée élémentaires d'interdiction. Ceci permet de garantir un débit ou une bande passante pour plusieurs noeuds situés en aval du noeud considéré.

Les circuits logiques 5 et 9 peuvent être réalisés indifféremment par des moyens logiciels ou matériels.

Selon un mode de mise en oeuvre préférentiel, le procédé se déroule selon l'algorithme suivant :
- Si un noeud détecte un trou et si ce noeud doit s'interdire d'émettre pendant au moins une durée élémentaire d'interdiction, c'est à dire 1500 octets :
   - - Si le trou a une taille supérieure à 1500 octets, alors le noeud s'interdit d'émettre pendant au moins une durée élémentaire d'interdiction (1500 octets) ;
   - - Si le trou a une taille inférieure à 1500 octets et qu'au moins un paquet de données de taille inférieur à 1500 octets est en attente dans sa mémoire tampon 4, alors le noeud émet ce paquet.
- Si un noeud détecte un trou, et si ce noeud n'a pas à s'interdire d'émettre, et s'il a un paquet de données en attente dans sa mémoire tampon 4, de taille inférieure à la taille du trou détecté, alors le noeud émet ce paquet.

Chaque noeud bénéficie non seulement d'une bande passante assurée par ce procédé de préservation, mais également du reste de bande passante non utilisé par les noeuds en amont.

La réalisation d'un contrôleur 11 est classique. Il s'agit d'une file d'attente simple qui autorise l'émission des paquets entrants avec un taux de transfert dont les limites sont fixées administrativement. L'implémentation consiste en un tampon appelé seau, constamment rempli par des unités d'informations virtuelles produites avec un débit spécifique. Chaque unité extraite du seau donne une autorisation d'émettre un paquet de données. Grâce à ce type de contrôleur 11, on peut assurer un pic de débit, c'est à dire que de courtes rafales de données peuvent être transmises en extrayant une suite d'unités accumulés.

Le fonctionnement du circuit 5 dépend de la classe de service qui concerne le noeud, parce que le circuit 5 collabore avec le contrôleur 11. Ainsi, une demande d'émission générée par le contrôleur 11 peut être neutralisée par un signal d'interdiction produit par le circuit 5 : c'est le cas des classes dites « best effort ». Mais une demande d'émission générée par le contrôleur 11 peut également être mis en attente par le circuit 5 afin d'être utilisée plus tard : c'est le cas des classes dites « premium ».

Les informations contenues dans la mémoire 8 de cet exemple sont des informations fixées correspondant à un contrat de niveau de service: le procédé de contrôle de trafic est alors un procédé préventif. On peut également envisager de mémoriser à leur place des informations variables, mises à jour par les noeuds en aval, afin de palier à d'éventuels problèmes de congestion dans le cas où un noeud en aval ne parvient pas à émettre ses paquets, et où ses mémoires tampons 4 sont pleines. Le procédé de contrôle de trafic est alors basé sur l'évolution du réseau : Il est donc un procédé réactif.

Pour certaines applications, il peut être avantageux de prévoir en outre des moyens de synchronisation des interdictions d'émission dans les différents noeuds du réseau. Cela permet de rendre déterministe le temps d'accès à la ressource. Des services de type circuit nécessitant non seulement une certaine bande passante mais aussi une connaissance et une certitude des instants de disponibilité de cette bande passante peuvent ainsi être réalisés.

Bien entendu, l'invention n'est pas limitée au mode de réalisation qui vient d'être décrit. L'invention a été décrite dans le cadre d'un réseau optique mais est également applicable aux réseaux électroniques. La ressource décrite était une longueur d'onde unique et la préservation d'une partie de la ressource consistait à interdire un intervalle de temps sur cette seule longueur d'onde, mais la ressource pourrait être aussi bien un ensemble de longueurs d'onde, chaque noeud utilisant un nombre variable de longueurs d'onde simultanément, et la préservation d'une partie de la ressource consisterait alors, dans chaque noeud, à s'interdire d'utiliser un certain nombre des longueurs d'onde pendant un certain temps.

## Revendications

1. Procédé de contrôle de trafic dans un réseau (1) comprenant une pluralité de noeuds (2A,... 2D) partageant au moins une même ressource (3), à structure linéaire, pour émettre des données dans une direction donnée ; dans lequel, dans chaque noeud (2B), il consiste à :
- détecter si ladite ressource est en cours d'utilisation pour émettre des données, ou bien si elle est inutilisée ;
- puis, si elle est inutilisée, interdire au noeud considéré (2B) l'émission de données dans une partie de ladite ressource (3) cette partie étant déterminée statistiquement en fonction des besoins d'utilisation de ladite ressource pour l'ensemble des noeuds (2C, 2D) situés en aval du noeud considéré (2B),
en ce que, si ladite ressource est inutilisée, il consiste en outre à mesurer au moins une borne inférieure de la durée pendant laquelle elle est inutilisée de manière continue ;
et en ce que pour interdire au noeud considéré (2B) l'émission de données dans une partie de ladite ressource (3), il consiste à interdire l'émission de données pendant un intervalle de temps ayant une durée égale à une durée élémentaire prédéterminée, dite d'interdiction, ou un multiple de celle-ci, la durée d'interdiction étant choisie inférieure ou égale à la durée mesurée
et en ce que un noeud commence à émettre un paquet, au début d'un trou seulement si la taille du paquet est inférieur à la taille du trou détecté, et que dans le cas contraire, le paquet reste dans une mémoire tampon du noeud jusqu'à ce qu'un trou suffisamment grand soit détecté.

2. Procédé selon la revendication 1, pour un réseau transmettant des paquets de données ayant des durées d'émission variables, **caractérisé en ce que** la durée élémentaire d'interdiction est au moins égale à la durée maximale d'émission d'un paquet ; et **en ce que** :
- Si un noeud détecte que la ressource est inutilisée, et si ce noeud doit s'interdire d'émettre pendant au moins une durée élémentaire d'interdiction
-- Si la durée de non utilisation est supérieure à une durée élémentaire d'interdiction, alors le noeud s'interdit d'émettre pendant au moins une durée élémentaire d'interdiction;
-- Si la durée de non utilisation est inférieure à une durée élémentaire d'interdiction et qu'au moins un paquet de données de taille inférieure à une durée élémentaire d'interdiction est en attente dans ce noeud, alors le noeud émet ce paquet;
- Si un noeud détecte que la ressource est inutilisée, et si ce noeud n'a pas à s'interdire d'émettre, et s'il a un paquet de données en attente, de faille intérieur à la durée de non utilisation, alors le noeud émet ce paquet

3. Noeud pour un réseau (1) comprenant une pluralité de noeuds (2A,...,2D) partageant au moins une même ressource (3) à structure linéaire, pour émettre des données dans une direction donnée, comportant:
- des moyens (10) pour détecter si ladite ressource est en cours d'utilisation pour émettre des données, ou bien si elle est inutilisée ;
- des moyens (5, 9) pour interdire au noeud considéré l'émission de données dans une partie de ladite ressource (3) si elle est inutilisée ;
- et des moyens (8) pour déterminer statistiquement cette partie de la ressource, en fonction des besoins d'utilisation de ladite ressource pour l'ensemble des noeuds (2C, 2D) situés en aval du noeud considéré (2B),
en ce que les moyens (10) pour détecter si ladite ressource est en cours d'utilisation pour émettre des données, ou bien si elle est inutilisée, comportent des moyens pour mesurer au moins une borne inférieure de la durée pendant laquelle elle est inutilisée de manière continue
et en ce que les moyens (5, 9) pour interdire au noeud considéré (2B) l'émission de données dans une partie de ladite ressource (3), comportent des moyens pour interdire rémission de données pendant un intervalle de temps ayant une durée égale à une durée élémentaire prédéterminée, dite d'interdiction, ou un multiple de celle-ci, la durée d'interdiction étant inférieure ou égale à la durée mesurée,
et en ce que un noeud est agencé pour commencer à émettre un paquet, au début d'un trou, seulement si la taille du paquet est inférieure à la taille du trou détecté, et que dans le cas contraire, le paquet reste dans une mémoire tampon du noeud jusqu'à ce qu'un trou suffisamment grand soit détecté.

4. Réseau (1) **caractérisé en ce qu'**il comporte une pluralité de noeuds (2A, 2B, 2C, 2D) selon la revendication précédente.

5. Réseau selon la revendication 4 **caractérisé en ce qu'**il comporte en outre :
- des moyens (6A) pour recevoir des informations sur le besoin d'utilisation de ladite ressource par tous les noeuds,
- et des moyens (6B) pour émettre à destination de chacun desdits noeuds des informations sur le besoin d'utilisation de ladite ressource par les noeuds situés en aval du noeud considéré.

## Claims

1. Method of monitoring traffic in a network (1) comprising a plurality of nodes (2A, ..., 2D) sharing one or more common resources (3) having a linear structure for sending data in a given direction, wherein, in each node (2B) it comprises:
- detecting if said resource is being used to send data or if it is not being used;
- then, if it is not being used, prohibiting the node (2B) concerned from sending data in a portion of said resource (3) said portion being determined statistically as a function of the requirements for use of said resource by all of the nodes (2C, 2D) on the downstream side of the node (2B) concerned;
and in that, if said resource is not being used, it further comprises in measuring one or more lower limits of the time during which it is continuously unused;
and in that, to prohibit the node (2B) concerned from sending data in a portion of said resource (3), it consists in prohibiting the sending of data during a time interval having a duration equal to a predetermined elementary prohibition duration or a multiple thereof, the prohibition duration being made less than or equal to the measured duration;
and in that a node begins to send a packet at the start of a gap only if the size of the packet is smaller than the size of the gap that has been detected, and otherwise the packet remains in a buffer of the node until a sufficiently large gap is detected.

2. Method according to claim 1, for a network transmitting data packets having variable sending durations, **characterised in that** the elementary prohibition duration is at least equal to the maximum duration for sending a packet and, **in that**:
- If a node detects that the resource is not being used and if the node must refrain from sending during one or more elementary prohibition durations:
-- If the duration of non-use is greater than an elementary prohibition duration, the node refrains from sending during at least one elementary prohibition duration;
-- If the duration of non-use is less than an elementary prohibition duration and there is at least on packet having a size less than an elementary prohibition duration waiting **in that** node, the node sends said packet;
- If a node detects that the resource is not being used, does not have to refrain from sending, and has a data packet waiting having a size less than the duration of non-use, the node sends that packet.

3. Node for a network (1) comprising a plurality of nodes (2A, ..., 2D) for sending data in a given direction that share at least one resource (3) and have a linear structure, comprising:
- means (10) for detecting if said resource is being used to send data or if it is not being used;
- means (5, 9) for prohibiting the node concerned from sending data in a portion of said resource (3) if it is not being used; and
- means (8) for determining statistically that resource portion as a function of requirements for use of said resource by all the nodes (2C, 2D) on the downstream side of the node (2B) concerned;
and in that the means (10) for detecting if said resource is being used to send data or if it is not being used include means for measuring at least one lower limit of the time during which it is continuously not being used;
and in that the means (5, 9) for prohibiting the node (2B) concerned from sending data in a portion of said resource (3) include means for prohibiting the sending of data during a time interval having a duration equal to a predetermined elementary prohibition duration or a multiple thereof, the prohibition duration being less than or equal to the measured duration;
and in that a node is adapted to begin sending a packet at the start of a gap only if the packet is smaller than the gap that has been detected, and otherwise the packet remains in a buffer of the node until a sufficiently large gap is detected.

4. Network (1) **characterised in that** it includes a plurality of nodes (2A, 2B, 2C, 2D) according to the preceding claim.

5. Network according to claim 4, **characterised in that** it further includes:
- means (6A) for receiving information on the requirement for use of said resource by all the nodes, and
- means (6B) for sending each of said nodes information on the requirement for use of said resource by the nodes on the downstream side of the node concerned.

## Patentansprüche

1. Verfahren zur Verkehrskontrolle in einem Netzwerk (1), das eine Vielzahl von Netzwerkelementen (2A, ..., 2D) enthält, die mindestens ein Mittel (3) gemeinsam nutzen, linear strukturiert, um Daten in eine bestimmte Richtung zu senden, bei dem es in jedem Netzwerkelement (2B) darin besteht:
- zu erfassen, ob dieses Mittel gerade zum Senden von Daten genutzt wird oder ob es ungenutzt ist;
- dann, wenn es ungenutzt ist, dem betrachteten Netzwerkelement (2B) das Senden von Daten in einem Teil dieses Mittels (3) zu untersagen, wobei dieser Teil statistisch bestimmt wird in Abhängigkeit von dem Nutzungsbedarf an diesem Mittel seitens sämtlicher Netzwerkelemente (2C, 2D), die dem betrachteten Netzwerkelement (2B) nachgeschaltet angeordnet sind,
**dadurch gekennzeichnet, dass** wenn dieses Mittel ungenutzt ist, es außerdem darin besteht, mindestens eine untere Grenze der Dauer zu messen, während derer es kontinuierlich ungenutzt ist;
und **dadurch gekennzeichnet, dass** es um dem betrachteten Netzwerkelement (2B) das Senden von Daten in einem Teil dieses Mittels (3) zu untersagen, es darin besteht, das Senden von Daten während eines Zeitintervalls zu untersagen, das eine Dauer gleich einer festgelegten elementaren so genannten Verbotsdauer hat oder ein Vielfaches selbiger, wobei die Verbotsdauer kleiner oder gleich der gemessenen Dauer gewählt wird
und **dadurch gekennzeichnet, dass** ein Netzwerkelement mit dem Senden eines Pakets am Anfang eines freien Platzes nur dann beginnt, wenn die Größe des Pakets kleiner ist als die Größe des entdeckten freien Platzes, und im gegenteiligen Fall, das Paket in einem Pufferspeicher des Netzwerkelements bleibt, bis ein freier Platz von ausreichender Größe erfasst wird.

2. Verfahren gemäß Anspruch 1, für ein Netzwerk, das Datenpakete überträgt, die variable Sendedauem haben, **dadurch gekennzeichnet, dass** die elementare Verbotsdauer mindestens gleich der maximalen Sendedauer eines Pakets ist; und **dadurch gekennzeichnet, dass**:
- Wenn ein Netzwerkelement erfasst, dass das Mittel ungenutzt ist, und wenn dieses Netzwerkelement sich das Senden während mindestens einer elementaren Verbotsdauer untersagen muss:
-- Falls die Dauer der Nichtnutzung größer ist als eine elementare Verbotsdauer, dann untersagt sich das Netzwerkelement das Senden während mindestens einer elementaren Verbotsdauer;
-- Falls die Dauer der Nichtnutzung kleiner ist als eine elementare Verbotsdauer und mindestens ein Datenpaket mit einer Größe kleiner einer elementaren Verbotsdauer in diesem Netzwerkelement wartet, dann sendet das Netzwerkelement dieses Paket;
- Wenn ein Netzwerkelement erfasst, dass das Mittel ungenutzt ist, und wenn dieses Netzwerkelement sich das Senden nicht untersagen muss, und wenn es ein wartendes Datenpaket mit einer Größe kleiner als die Dauer der Nichtnutzung hat, dann sendet das Netzwerkelement dieses Paket.

3. Netzwerkelement für ein Netzwerk (1), das eine Vielzahl von Netzwerkelementen (2A, ..., 2D) enthält, die mindestens ein Mittel (3) gemeinsam nutzen, linear strukturiert, um Daten in eine bestimmte Richtung zu senden, enthaltend:
- Mittel (10) zum Erfassen, ob dieses Mittel gerade zum Senden von Daten genutzt wird oder ob es ungenutzt ist;
- Mittel (5, 9), um dem betrachteten Netzwerkelement das Senden von Daten in einem Teil dieses Mittels (3) zu untersagen, wenn es ungenutzt ist,
- und Mittel (8), um statistisch diesen Teil des Mittels in Abhängigkeit vom Nutzungsbedarf dieses Mittels für sämtliche Netzwerkelemente (2C, 2D) zu bestimmen, die dem betrachteten Netzwerkelement (2B) nachgeschaltet sind,
**dadurch gekennzeichnet, dass** die Mittel (10) zum Erfassen, ob dieses Mittel gerade zum Senden von Daten genutzt wird oder ob es ungenutzt ist, Mittel enthalten, um mindestens eine untere Grenze der Dauer zu messen, während derer es kontinuierlich ungenutzt ist;
und **dadurch gekennzeichnet, dass** die Mittel (5, 9), die dem betrachteten Netzwerkelement (2B) das Senden von Daten in einem Teil dieses Mittels (3) untersagen, Mittel beinhalten, um das Senden von Daten während eines Zeitintervalls zu untersagen, das eine Dauer gleich einer festgelegten elementaren Dauer, der so genannten Verbotsdauer hat, oder ein Vielfaches derselben, wobei die Verbotsdauer kleiner oder gleich der gemessenen Dauer ist,
und **dadurch gekennzeichnet, dass** ein Netzwerkelement so aufgebaut ist, dass es mit dem Senden eines Datenpakets zu Beginn eines freien Platzes nur dann beginnt, wenn die Größe des Pakets kleiner ist als die Größe des erfassten freien Platzes, und im gegenteiligen Fall das Paket in einem Pufferspeicher des Netzwerkelements bleibt, bis ein freier Platz von ausreichender Größe erfasst wird.

4. Netzwerk (1), **dadurch gekennzeichnet, dass** es eine Vielzahl von Netzwerkelementen (2A, 2B, 2C, 2D) gemäß dem vorstehenden Anspruch enthält.

5. Netzwerk gemäß Anspruch 4, **dadurch gekennzeichnet, dass** es außerdem folgendes enthält:
- Mittel (6A) zum Empfangen von Informationen über den Nutzungsbedarf an diesem Mittel seitens aller Netzwerkelemente,
- und Mittel (6B), um jeweils an diese Netzwerkelemente Informationen zu senden über den Nutzungsbedarf an diesem Mittel seitens der Netzwerkelemente, die dem betrachteten Netzwerkelement nachgeschaltet sind.
